# EUROPEAN PATENT APPLICATION

(11) **EP 2 113 537 A1**
(43) Date of publication of application: **04.11.2009**
(21) Application number: 08290403.8
(22) Date of filing: 28.04.2008
(51) Int. Cl.: C09D 5/03, C09D 7/00, C09D 201/00

(54) **Powder coating composition**

(71) Applicant: Dupont Powder Coatings France S.A.S., 42601 Montbrison Cedex (FR); E.I. DU PONT DE NEMOURS AND COMPANY, Wilmington, DE 19898 (US)
(72) Inventor: van den Bosch, Guido, 3191 Hever-Schiplaken (BE); Rodriguez-Santamarta, Carlos, 08002 Barcelona (ES); de Marre, Anne, 3191 Boortmeerbeek (BE); Jones, Pip Niall, 45657 Recklinghausen (DE); Vérité, Laurent, 1180 Brussels (BE); Grawe, Thomas, 51371 Leverkusen (DE)
(74) Representative: Hirsch & Associés

(57) **Abstract**

The invention provides a powder coating composition prepared from a combination, the combination comprising:
A) at least one binder resin and, optionally at least one curing agent,
B) at least one calibrated pigmented liquid, based on at least one pigment, and,
C) optionally, at least one pigment and/or extenders and/or additive.

The powder coating composition of the invention provides a precise colour and gloss control of the coatings having a desired colour with high colour stability. Therefore there is no need for additional adjustment tests or re-working procedures, and, therefore, it makes it possible to offer efficient, small-batch manufacture of custom colours, for example, to match a swatch of fabric supplied by a customer.

## Description

### Field of the Invention

The invention refers to a powder coating composition providing a highly reproducible colour strength and colour position accuracy in the final coating.

### Background of the Invention

Pigmented powder coating compositions that meet a customer's colour specifications require a labour-intensive multi-step approach during their preparation, for example, batch mixing, extrusion, further processing and coating of powder samples, measurements of colour, laboratory tests, adjustment of the raw materials and re-mixing and re-processing, re-mixing with extra pigment. In general, it is difficult to achieve the desired colour without correction steps because of batch to batch pigment variability and equipment performance variability.

One way to solve this problem is the provision of a limited number of stored, intermediate coating compositions which are combined, depending on the desired colour effect, and corresponding to the specific customer needs. Thus, there exists in the literature a number of examples describing dry-blends of powder coating compositions by mixing powder coating intermediate compositions having different colours, for example, WO 99/50360, EP-A 826 746, JP-A 11279464, JP-A 11286635.

WO 98/36030 describes a coloured powder coating composition consisting of two or more colour formulations which are dry-mixed together. The particles of one formulation are coloured and the particles of the other formulation have a different colour, or are optionally colourless. The composition forms a continuous coating, and the differences in colour cannot be differentiated by human eye.

WO 99/23068 discloses a process wherein different coloured fine powder compositions are compacted resulting in powders of uniform colours.

JP-A 52-47 031 describes the production of thermosetting powder paints, whereby the thermosetting resin, colour pigments and various additives are melt dispersed in a heating kneader. The preliminary dispersion composition of each original colour is mixed to obtain the desired colour, and the curing agent and optionally resins and additives are added to the mixture which is then melt mixed and pulverized.

However, these processes require the storage and production of appropriate finished coating compositions, e.g. pigmented coating powders or pigment-coated resins in a large number of different primary colours, in order to be able to produce the broadest range of final product colours. In addition, a uniform colour often cannot be obtained if the particle sizes of the different powder compositions to be mixed have too high value such as higher than, for example, 20 micrometers. Additionally, the production of such finely divided coating powders is energy-intensive and may create both dust explosion hazards and can also be inhaled by operators if not handled properly. Also, the coating powders will tend to absorb water if not stored properly, and coating powders with variable water content cannot be accurately measured in order to achieve a desired product colour, and agglomerated coating powders cannot be mixed as efficiently in order to produce a high quality final product.

JP 2001-288414 refers to a method for producing a powder coating which is suitable for the production of small batches of various colours using a few types of primary colour pellets and dry-mixing the types of pellets in suitable amounts to create the pre-determined coating colour followed by co-milling thereof. The powder pellets are produced by mixing, extruding and grinding of powder coating components with pigments and additives to obtain pellets having a specific colour.

WO 2006/047238 discloses the use of liquid pigment dispersions in which pigment is dispersed in a liquid polyester resin or optionally in a dispersing resin and solvent. This approach could not produce a high quality consistent product without multiple intermediate colour checks and adjustments to the powder coating during processing. For example, blue formulations could show weaker colour strength in a polyurethane (PUR) chemistry, but stronger colour strength in hybrid chemistry, compared to a traditional formulation. The converse could be true for formulations using a red pigment. Thus it is not proven that the use of pigmented liquid dispersions described led to improved colour strength in the final powder coating. Additionally, the use of liquid dispersing resins having a low glass transition temperature necessitates the use of further additives in the powder coating formulation to increase the glass transition temperature of the final product to give the required storage stability for the coating powder.

WO 2007/087169 and WO 2007/140131 refer to dispersions of polymer-enclosed colour-imparting particles for incorporating into powder coating compositions. The particles need to be prepared by polymerisation enclosure.

### Summary of the Invention

The present invention provides a powder coating composition prepared from a combination, the combination comprising:
A) at least one binder resin and, optionally at least one curing agent,
B) at least one calibrated pigmented liquid, based on at least one pigment, and,
C) optionally, at least one pigment and/or extender and/or additive.

The powder coating composition of the invention provides a precise colour and gloss control of the coatings having a desired colour with high colour stability. Therefore there is no need for additional adjustment tests or re-working procedures, and, therefore, it makes it possible to offer efficient, small-batch manufacture of custom colours, for example, to match a swatch of fabric supplied by a customer. The resulting coatings fulfil the requirements regarding properties of common powder coatings such as the desired colour, gloss, film appearance and mechanical properties. The colour and appearance of the final product is also less sensitive to variations in process equipment geometry and process conditions, thus ensuring that the powder coating can be produced at multiple locations whilst still delivering consistent product.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

Slight variations above and below the stated ranges can be used to achieve substantially the same results as values within the ranges. Also, the disclosure of these ranges is intended as a continuous range including every value between the minimum and maximum values.

Conventional binder resins and curing agents known to a person skilled in the art may be used as component A) of the invention.

Examples of binder resins are polyester resins, urethane resins, polyester urethane resins, polyester epoxy resins, epoxy resins, (meth) acrylic resins, alkyd resins and melamine/urea/formaldehyde resins.

Suitable polyester resins may be either acid or hydroxyl functional, depending on the cross-linking chemistry used. For example, hydroxyl functional polyester resins may have a hydroxyl number in the range of, for example, 30 to 350 mg KOH/g resin, and carboxyl functional polyester resin may have an acid number in the range of, for example, 10 to 200 mg KOH/g resin. The polyesters may be produced in a conventional manner by reacting of one or more aliphatic, aromatic or cycloaliphatic di- or polycarboxylic acids, and the anhydrides and/or esters thereof with polyalcohols, as is, for example, described in D.A. Bates, The Science of Powder Coatings, volumes 1 & 2, Gardiner House, London, 1990, and as known by the person skilled in the art.

Suitable (meth)acrylic resins include, for example, copolymers prepared from alkyl(meth) acrylates with glycidyl(meth) acrylates and olefinic monomers; functionalized resins such as polyester (meth) acrylates , epoxy (meth) acrylates, urethane (meth) acrylates, glycidyl(meth) acrylates.

The term (meth) acrylic is respectively intended to mean acrylic and/or methacrylic.

Crystalline and/or semi-crystalline binder resins are also usable which have a Tm (melting temperature) in the range of e.g., 50 to 200°C, determined by means of differential scanning calorimetry (DSC).

Preferred is the use of polyester resins, polyester urethane resins, polyester epoxy resins and/or (meth) acrylic resins. Particularly preferred is the use of polyester resins and/or (meth) acrylic resins.

The content of at least one binder resin in component A) of the combination according to the invention can be in a range between 50 and 100 parts per weight, preferably, between 60 and 97 parts per weight, parts per weight based on component A), depending on the cross-linking chemistry of the binder resin and curing agent of component A).

The binder resins may comprise self cross-linkable resins containing cross-linkable functional groups known by a person skilled in the art. In this case, no curing agent needs to be used in the composition according to the invention.

The final product can also be cross-linked by using at least one curing agent (cross-linker) in component A) suitable for the binder resins known by a person skilled in the art. Examples of curing agents are blocked cycloaliphatic, aliphatic or aromatic polyisocyanates; agents containing epoxy groups, such as, for example, triglycidyl isocyanurate (TGIC); polyglycidyl ethers based on diethylene glycol; glycidyl functionalized (meth) acrylic copolymers; agents containing amino, amido, (meth)acrylate and/or hydroxyl groups, for example hydroxyl alkylamide crosslinker, as well as vinyl ethers. Furthermore, conventionally curing agents such as, dicyanodiamide hardeners, carboxylic acid hardeners or phenolic hardeners are usable.

The ratio of a polyester resin as binder resin to TGIC as curing agent can be, for example, between 95:5 and 98:2; the ratio of a polyester resin as binder resin to PRIMID ® (EMS-Chemie AG, Germany) as curing agent can be, for example, 90:10 and 95:5; the ratio of an acid functional polyester as binder resin to a glycidyl functional (meth) acrylate resin as curing agent can be, for example, between 55:45 and 65:35. The amounts may be above or below these ranges, depending, for example, on the binder resin properties, on the acid number of the polyester and/or on the epoxy-equivalent weight of the (meth) acrylate resin, as known to a person skilled in the art.

The content of component A) in the combination used for preparation of the composition according to the invention is 20 to 99.9 weight %, preferably 30 to 90 weight % and most preferably 40 to 80 weight %, the weight % based on the total weight of the combination A) to C) of the invention.

The combination according to the invention comprises as component B) at least one calibrated pigmented liquid. Pigmented liquid means that these are liquids, solvent-borne and/or water-borne, as solution and/or dispersion, comprising at least one pigment. Preferred are water-bome calibrated pigmented liquids. These liquids may contain at least one pigment, and may contain polymeric dispersants for stabilisation of the pigment.

The calibrated pigmented liquids are characterized in such a way that they can be adjusted to have highly reproducible colour strength and colour position. The pigmented liquids are processed to maximise the colour strength that the pigments can achieve. This means that a minimal amount of pigment is required, but also that the variations in the manufacturing process will not give differences in colour strength, as would occur if the powder coating formulation contains solid pigment or pigment agglomerate-containing liquids. For example, the extruder shear history, for example, by using different extruders, will not affect the calibrated pigmented liquids nor change the final powder coating colour.

Calibrated pigmented liquids used in liquid coating businesses, thus referred to as "tints", can be used for this invention. The benefit of the calibration is that a recipe that uses this pigmented liquids will give a well-defined final coating colour when known masses or volumes of raw materials are mixed together, irrespective of the natural colour strength of the pigment batch used to formulate this calibrated pigmented liquids. The calibrated pigmented liquids have proven storage stability and can thus be manufactured in large volumes and easily stored at local manufacturing sites.

The calibrated pigmented liquids contain between 0.5 and 80 weight % of at least one pigment, preferably between 3 and 50 weight % of at least one pigment, and they may contain between 10 and 90 weight % of water and/or solvent, the weight % based on the calibrated tints. The calibrated pigmented liquids may optionally contain polymeric dispersants and other additives to improve the stability of the calibrated pigmented liquids, for example by preventing agglomeration or settling of the polymeric dispersants, as well as to give other desired properties of the calibrated pigmented liquids, such as a desired mixture viscosity.

Examples of colouring pigments used in the calibrated pigmented liquids are colour-imparting and/or special effect-imparting pigments and/or fillers (extenders). Suitable colour-imparting pigments are any conventional coating pigments of an organic or inorganic nature considering their heat stability which must be sufficient to withstand the curing conditions of the powder coating composition of the invention. Examples of inorganic or organic colour-imparting pigments are titanium dioxide, micronized titanium dioxide, carbon black, iron oxide, azo pigments, and phthalocyanine pigments. Examples of special effect-imparting pigments are metal pigments, for example, made from aluminium, copper or other metals, interference pigments, such as, metal oxide coated metal pigments and coated mica. Examples of usable extenders are silicon dioxide, aluminium silicate, barium sulfate, calcium carbonate, magnesium carbonate and micronized dolomite.

The polymeric dispersants can be resins having a sufficiently high glass transition temperature to give a stable final powder coating composition of the invention having little or no glass transition temperature modifiers. Examples of polymeric dispersants for the stabilisation of the pigment in the tints are resins formed by copolymerisation of hydrophobic and hydrophilic monomers.

It is possible to use at least one calibrated pigmented liquid, but it is also possible to use at least two calibrated pigmented liquids having different colour data, for example, different RAL colours. RAL colours mean the standard of the RAL (Reichsausschuss fuer Lieferbedingungen) Institute for colours, known to a person skilled in the art.

The content of component B) in the combination used for preparation of the composition according to the invention depends on the colour strength of the calibrated pigmented liquid or calibrated pigmented liquids that are used and the desired colour provided by the powder coating composition prepared from the combination of this invention. The content is typically 0.1 to 80 weight %, preferably 0.3 to 70 weight % and most preferably 0.5 to 45 weight %, the weight % based on the total weight of the combination A) to C) of the invention.

At least one pigment and/or extender and/or additive can be used as component C) of the combination according to the invention.

Examples of pigments are those as already mentioned above. Common extenders and additives are agents known to a person skilled in the art and may be solid or liquid. Examples of extenders (fillers) are barium sulfate, clay, calcium carbonate. Examples of additives are levelling agents, rheological agents such as highly dispersed silica or polymeric urea compounds, thickeners, for example based on partially cross-linked, carboxy-functional polymers or on polyurethanes, defoamers, wetting agents, anticratering agents, degassing agents, thermolabile initiators, antioxidants and light stabilizers based on HALS (hindered amine light stabilizer) products, tribo-charging agents, accelerators, initiators, inhibitors and catalysts. The additives can be used, in conventional amounts known to the person skilled in the art, for example, 0.01 to 10 weight %, based on the total weight of the combination.

The content of component C) in the combination used for preparation of the composition according to the invention will be between 0 and 50 weight %, based on the total weight of the combination A) to C) of the invention.

In particular, the present invention provides a powder coating composition prepared from a combination, the combination comprising
A) 20 to 99.9 weight %, preferably 30 to 90 weight % and most preferably 40 to 80 weight %, of at least one binder resin and, optionally at least one curing agent,
B) 0.1 to 80 weight %, preferably 0.3 to 70 weight % and most preferably 0.5 to 45 weight %, of at least one calibrated pigmented liquid, based on at least one pigment, and,
C) 0 to 50 weight % of at least one pigment and/or extender and/or additive, the weight % based on the total weight of the combination A) to C).

The combination of A) to C) of the invention can be a mixture which is dried and further processed in order to give the final powder coating composition of the invention. The final powder coating composition will have between 0 and 7 weight %, preferably less than 3 weight % of residual water and/or solvent, the weight % based on the total weight of the powder coating composition,.

The powder coating composition of the invention may be prepared by conventional manufacturing techniques used in the powder coating industry. For example, the components A) to C) can be blended together to a mixture, and then the mixture is extruded, at a temperature at which cross-linking (curing) does not occur.

A pre-mixing of the components of the combination prior to extrusion and to further processing can be done. For example, component A) and component C) can be incorporated into component B) of the invention. Pre-mixing can also be done by adding component B) to one of component A) and C) or to a mixture of component A) and C).

Most or all of the water and/or solvent content of component B) can be removed during processing, preferably either before or during the extrusion process. Examples of the method for removal of this water and/or solvent are vacuum extrusion, batch heating with or without vacuum, and spray drying, and are known to a person skilled in the art.

The extrusion process is known to a person skilled in the art. In the extruder the mixture is melted and homogenized at a temperature in a range of, for example, 30 to 170°C. The extruded material is then cooled on chill rolls and is broken up into pre-powder particles, which can be in the form of chips or pellets, followed by grinding to form a finely divided powder with a typical particle size for a coating powder, for example, an average particle size of 20 to 200 µm, preferably 40 to 100 µm. The resulting finished powder coating composition is usable without any additional adjustment tests or re-working procedures. The liquid content of the final powder coating composition is in the range of 0 and 7 weight %, preferably less than 3 weight %, based on the total weight of the powder coating composition.

Furthermore, specific components of the composition according to the invention, for example, additives, pigment, extenders, may be processed with the finished powder coating particles after extrusion and grinding by a "bonding" process using an impact fusion. For this purpose, the specific components may be mixed with the powder coating particles. During blending, the individual powder coating particles are treated to softening their surface so that the components adhere to them and are homogeneously bonded with the surface of the powder coating particles. The softening of the powder particles' surface may be done by heat treating the particles to a temperature, e.g. the glass transition temperature Tg of the powder coating composition, in a range, of e.g., 50 to 60°C. After cooling the mixture the desired particle size of the resulted particles may be proceed by a sieving process.

The final powder coating composition of the invention may be applied by techniques known in the art to, e.g., metallic substrates, non-metallic substrates, such as, paper, wood, plastics, glass and ceramics, including heat-sensitive substrates, as a one-coating system or as coating layer in a multi-layer film build, onto pre-heated or non-pre-heated substrates. The powder coating composition according to the invention can be applied directly on the substrate surface or on a layer of a primer which can be a liquid or a powder based primer, for example, a conductive primer in case of coating of non-conductive substrates like wood or MDF.

The applied and melted powder can be cured by thermal energy. The coating layer may, for example, be exposed to convective, gas and/or radiant heating, e.g., infra red (IR) and/or near infra red (NIR) irradiation, as known in the art, to temperatures of, e.g., 100 to 300°C, preferably of 120 to 200°C for convective thermal curing and preferably 200 to 280°C for radiation heating processes (object temperature in each case). If the composition according to the invention is used together with unsaturated resins and, optionally photo-initiators or with unsaturated resin containing powders, dual curing may also be used. Dual curing means a curing method of the powder coating composition according to the invention where the applied composition can be cured, e.g., both by high energy radiation such as, e.g. ultra violet (UV) irradiation, and by thermal curing methods known by a skilled person.

## Claims

1. A powder coating composition prepared from a combination, the combination comprising
A) at least one binder resin and, optionally at least one curing agent,
B) at least one calibrated pigmented liquid, based on at least one pigment, and,
C) optionally, at least one pigment and/or extenders and/or additive.

2. The composition of claim 1 prepared from a combination comprising
A) 20 to 99.9 weight % of at least one binder resin and, optionally at least one curing agent,
B) 0.1 to 80 weight % of at least one calibrated pigmented liquid, based on at least one pigment, and,
C) 0 to 50 weight % of at least one pigment and/or extender and/or additive, the weight % based on the total weight of the combination A) to C).

3. The composition of claims 1 and 2 prepared from a combination comprising
A) 30 to 90 weight % of at least one binder resin and, optionally at least one curing agent,
B) 0.3 to 70 weight % of at least one calibrated pigmented liquid, based on at least one pigment, and,
C) 0 to 50 weight % of at least one pigment and/or extender and/or additive, the weight % based on the total weight of the combination A) to C).

4. The composition of claims 1 to 3 wherein at least one resin selected from the group consisting of polyester resins, urethane resins, polyester urethane resins, polyester epoxy resins, epoxy resins, (meth) acrylic resins, alkyd resins and melamine/urea/formaldehyde resins is used as binder resin of component A).

5. The composition of claims 1 to 4 wherein at least one water-borne calibrated pigmented liquid is used as component B).

6. A process of preparation the composition of claims 1 to 5 by mixing and extrusion process of components A) to C) wherein a pre-mixing is done by incorporating the components A) and C) into component B), extrusion, and removing the water and/or solvent content of component B) before or during the extrusion process.

7. A process of coating comprising the steps (a) applying the composition of claims 1 to 5 onto a substrate, and (b) curing the applied composition.

8. A substrate coated with the composition of claims 1 to 5 and curing the composition.
